Europäisches Patentamt

European Patent Office

Office européen des brevets

(19)

(11) EP 0 770 884 A1

(12) DEMANDE DE BREVET EUROPEEN

(43) Date de publication:
02.05.1997 Bulletin 1997/18

(51) Int Cl.⁶: $G01S\ 3/784$, $F41G\ 7/22$

(21) Numéro de dépôt: 96402195.0

(22) Date de dépôt: 15.10.1996

(84) Etats contractants désignés:
DE FR GB

(30) Priorité: 27.10.1995 FR 9512718

(71) Demandeur: THOMSON-CSF
75008 Paris (FR)

(72) Inventeurs:
• Soucail, Bernard, Thomson CSF, SCPI
92402 Courbevoie Cedex (FR)

• Delon, Michel, Thomson CSF, SCPI
92402 Courbevoie Cedex (FR)
• Rousseau, Pascal, Thomson CSF, SCPI
92402 Courbevoie Cedex (FR)

(74) Mandataire: Albert, Claude
THOMSON-CSF-S.C.P.I.,
13, Avenue du Président
Salvador Allende
94117 Arcueil Cédex (FR)

(54) **Procédé de détection par désignation laser et dispositif d'écartométrie à détecteur matriciel correspondant**

(57) L'invention propose de réaliser une écartométrie sensible en s'affranchissant du bruit solaire spatial qui masque la détection. Pour ce faire, le procédé de l'invention consiste, après formation d'une image de scène contenant une image de cible illuminée par laser formant une tache, et focalisation du flux provenant de la scène, à effectuer une détection de la tache par transfert continu des charges d'un CCD matriciel libérées par conversion photonique du flux incident pour limiter le temps d'exposition.

Un dispositif de mise en oeuvre comporte un objectif (1) de focalisation sur un détecteur matriciel (2) à pixels ($P_i$) intégrant un circuit de multiplexage (C) couplé à un registre de sortie à décalage (R), un étage d'amplification (A) et une unité de traitement (5) comportant un séquenceur (33) pour appliquer des signaux de transfert des charges au détecteur (2) et au registre de sortie (R), et un capteur d'impulsion laser auxiliaire (6). L'unité (5) comporte des moyens de seuillage (30,31) pour sélectionner en sortie du registre (R) le signal ($S_i$) d'intensité supérieur et un processeur (32) pour calculer une écartométrie de cible à partir des instants de détection auxiliaire du capteur (6) et de sélection des moyens de seuillage.

Application au guidage laser de missiles.

FIG.3

## Description

La présente invention concerne le domaine de la détection de cible par illumination et, plus particulièrement, la désignation de cible illuminée par faisceau laser en vue de son ralliement. L'invention s'applique notamment au guidage laser d'armes pour atteindre des sites situés au sol.

Afin de réaliser un tel ralliement, les systèmes de guidage laser utilisent un type de récepteur particulier : un dispositif d'écartométrie intégrant un détecteur d'observation adapté. Le dispositif d'écartométrie détermine l'écart angulaire entre l'axe de sa ligne de visée et la direction du point au sol illuminé par le laser d'un émetteur associé. La direction de cette illumination est repérée à partir de la position dans le plan image du point ainsi désigné, telle que formée sur le détecteur d'observation du dispositif d'écartométrie.

Dans la plupart des applications, cette mesure permet d'asservir la ligne de visée du système à l'axe du point désigné et d'atteindre la cible en suivant une trajectoire également asservie. Ce type de récepteur équipe par exemple les autodirecteurs des missiles guidés par le laser désignateur d'une conduite de tir montée sur avion, ou dans des systèmes montés sur avion pour acquérir une cible au sol illuminée par un système coopératif.

Pour ces applications, une fonction supplémentaire est requise: le décodage des signaux lasers. En effet, pour éviter le leurrage par des systèmes lasers annexes, les émetteurs utilisent des lasers de désignation impulsionnels, par exemple de type Nd : YAG (à cristal de Grenat d'Yttrium et d'Aluminium dopé par des ions de Néodyme). La durée d'impulsion de tels lasers est de 10 à 30 ns, et la fréquence de répétition est inférieure à quelques dizaines de Hertz. La fréquence de répétition des impulsions constitue alors un code qui n'est connu que de l'émetteur et du récepteur. Le dispositif d'écartométrie doit donc être apte à fournir la mesure de deux informations pour réaliser un ralliement : une information d'écart angulaire et une information de mesure temporelle des instants d'arrivée des impulsions.

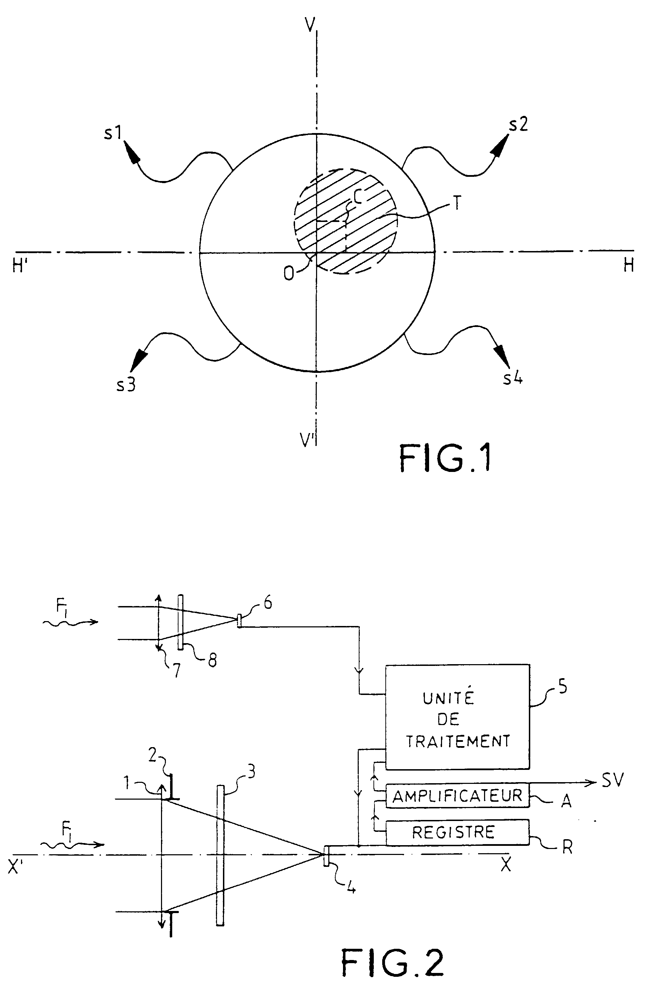

Les dispositifs d'écartométrie sont basés classiquement sur l'utilisation d'un détecteur D dit à quatre quadrants Q1 à Q4 de surface photosensible, tel que schématiquement représenté sur la figure 1. Le détecteur est placé approximativement au foyer d'un objectif dont l'axe passe par le centre du détecteur O, de telle sorte que l'objectif forme sur le détecteur une image du point illuminé en forme de tache T. La mesure de l'écartométrie est effectuée à partir de la pesée des intensités des signaux s1 à s4 des quatre quadrants proportionnellement à la portion de surface de la tache interceptée par chacun des quadrants. Si l'axe de visée est superposé à l'axe désigné, la tache T est alors centrée en O, et les quatre quadrants fournissent un signal de même intensité. Par contre, si les deux axes ne sont pas superposés, les quatre signaux ont une intensité différente, ce qui permet de calculer, dans un certain domaine, la déviation angulaire entre ces axes et d'asservir la trajectoire du porteur à une déviation angulaire nulle.

La déviation angulaire est calculée à partir des coordonnées du centre C de la tache T repéré en position verticale et en position horizontale respectivement sur les axes de symétrie VV et H'H du détecteur. Les valeurs de ces coordonnées sont fournies par des rapports de combinaisons des intensités des signaux s1 à s4. Ces rapports représentent une pesée relative de la répartition des portions de surface interceptées entre, d'une part, les quadrants supérieurs Q1 et Q2, et les quadrants inférieurs Q3 et Q4, et, d'autre part, entre les quadrants de gauche Q1 et Q3, et les quadrants de droite Q2 et Q4. Ces rapports sont fournis par des circuits de traitement convenablement choisis et branchés. La structure d'un tel détecteur et de ses circuits de traitement est décrit par exemple dans le brevet EP 310 493.

Un premier inconvénient d'un tel système vient de la difficulté à réaliser un objectif qui induise une répartition homogène de l'énergie sur toute l'étendue de la tache laser. Une telle homogénéité est en effet nécessaire pour assurer la linéarité entre la pesée et les écarts angulaires entre l'axe de visée et la direction du point illuminé.

Un problème majeur soulevé par ce type de mesure est sa sensibilité modérée. Une sensibilité de détection se définit par la précision du rapport signal à bruit de la mesure. Or, l'énergie E de la tache laser est répartie sur quatre quadrants alors que la mesure de la déviation se fait par variation de cette énergie. Ainsi, pour pouvoir discriminer N positions différentes de la tache (par exemple N = 50), une première estimation montre que, pour conserver une même portée des mesures, il faut être capable de pouvoir mesurer une intensité de signal de l'ordre de E/N. Pour récupérer un maximum d'énergie, il est alors nécessaire de recourir à des objectifs de focalisation de grand diamètre dont le coût est élevé.

Il est également possible de réaliser une écartométrie en utilisant une imagerie à détecteur multipoints à intégration et transfert, de type CCD (initiales de "Charge Coupled Device en terminologie anglo-saxonne), situé avec précision dans le plan focal d'un objectif de focalisation associé. Les détecteurs CCD, par exemple ceux classiquement utilisées en télévision, comportent un ensemble de zones photosensibles en silicium (appelées ci-après "pixels" d'après la terminologie anglosaxonne) organisés en matrice généralement carrée, typiquement 100X100 pixels. L'utilisation d'un matériau photosensible dans le spectre visible et proche infrarouge, par exemple le silicium, convient particulièrement à la détection d'un laser émettant dans le proche infrarouge, comme le laser Nd : YAG.

Le détecteur effectue une conversion des photons en électrons proportionnellement à l'éclairement reçu par chaque pixel dans leur bande spectrale de sensibilité, puis une intégration de ces charges dans des puits de potentiels, et une lecture de ces charges par transfert par colonne et multiplexage ligne à ligne dans un circuit piloté par un séquenceur programmé. Un registre de sortie génère, après amplification, un signal de sortie haute fréquence unique, contenant en séquence toutes les informations de luminance de la matrice. Un détecteur de ce type est décrit par exemple dans la demande de brevet internationale publiée sous le numéro WO 90/01844, ou dans le brevet US 4 609 825.

La durée de la phase d'intégration peut être ajustée et dure typiquement quelques millisecondes. La durée de la phase de lecture est déterminée par le nombre de pixels et la cadence de sortie admissible par l'amplificateur de sortie. Elle vaut quelques dizaines de millisecondes dans les composants standards.

Avec un tel détecteur, l'écartométrie peut être réalisée par la détermination de trois informations : les deux angles de la direction du laser désignateur, et l'instant d'éclairement pour reconnaître le code de l'illuminateur. De par sa position au foyer d'une optique, la matrice fournit les deux informations angulaires, mais ne répond pas au besoin d'information temporelle. En effet, la durée d'intégration et de lecture du signal est grande devant la précision de la période, de l'ordre de 10 microsecondes pour satisfaire le décodage de l'illuminateur, des impulsions laser. Il s'avère donc utile d'adjoindre au détecteur matriciel, un petit capteur d'impulsion laser rapide (temps de réaction de l'ordre de la centaine de nanosecondes) dont la fonction est dédiée à la détermination des instants d'illumination.

Dans le mode de fonctionnement habituel, dénommé ci-après mode imagerie, le détecteur CCD fait l'acquisition de la scène, comprenant éventuellement une illumination laser. L'image est ensuite transférée pour être lue par multiplexage ligne à ligne pendant l'acquisition de l'image suivante. Un calcul de sensibilité montre que, en absence de bruit dû au fond de scène, le système détecte des impulsions laser avec de bonnes performances.

Par contre, de jour, la contribution de l'éclairement solaire perturbe de façon importante le signal, même après filtrage autour de la longueur d'onde de l'illuminateur, car le temps d'intégration de l'image est long devant la durée de l'impulsion. Si tout le signal utile est fourni par l'illuminateur en 20 ns environ, le signal du fond $S_f$ est intégré pendant tout le temps d'une image, soit quelques millisecondes. Ceci peut causer la saturation du CCD et, dans tous les cas, crée un bruit supplémentaire qui va masquer le signal laser.

Ce bruit solaire se compose d'un bruit photonique, égal à $\sqrt{S_f}$, qui peut se limiter à trois ou quatre fois le bruit électronique des circuits, ce qui peut être admissible; mais il comporte surtout un bruit spatial dû aux variations d'albédo des différents points de la scène. Si on considère que l'albédo $\rho$ varie uniformément entre 0 et 1 sur toute la scène, le bruit spatial associé est égal à, $1/\sqrt{12}\ (S_f)_{max}$, $(S_f)_{max}$ étant la valeur maximale du signal de fond, obtenue pour $\rho = 1$. L'amplitude de ce bruit, qui atteint plus de mille fois le bruit électronique, rend impossible, en plein jour, tout fonctionnement sensible de la matrice de photodétecteurs en détection d'impulsion laser. L'expression mathématique du signal de fond et des exemples de valeurs de ce signal et des bruits photonique et spatial sont donnés dans la description qui suit.

L'invention propose d'éliminer ces inconvénients, en réalisant une écartométrie sensible, tout en s'affranchissant des problèmes de bruit spatial pouvant atteindre la saturation, évoqués plus haut.

Pour ce faire, l'invention s'appuie sur le fait que la durée d'impulsion laser est infiniment courte au regard du temps de transfert d'un détecteur matriciel et la détermination de l'écartométrie peut être réalisée même si l'image est en mouvement. La détection de cible désignée par un illuminateur laser est ainsi effectuée lorsque le fonctionnement du détecteur est utilisé selon un mode particulier, ci-après dénommé mode "tapis roulant".

Dans ce mode, la phase d'intégration des charges a disparu et le CCD est en transfert de charges permanent vers le registre de sortie. Il ne fait plus une image nette de la scène par intégration de points d'image de scène fixes vus pendant un temps donné, mais une acquisition glissante de tous les points vus consécutivement sur une même colonne, limitée seulement par la cadence admise par l'amplificateur de sortie. Le signal de visualisation de sortie est fonction des valeurs de luminance converties par les pixels de chaque colonne. Dans ce conditions :

-    en l'absence d'impulsion laser, les valeurs converties sont sensiblement identiques en moyenne par colonne, pour un nombre suffisant de lignes. Le bruit spatial est alors supprimé par une opération de sommation, le bruit photonique restant étant raisonnablement limité en intensité ;
-    en présence d'impulsion laser, le signal séquentiel correspondant aux pixels de la ou des colonnes sur lesquels la tache de laser s'est formée a une intensité plus grande, ce qui permet de déterminer la position horizontale de la tache sur le détecteur; la position verticale étant déduite par chronométrie.

Plus précisément, l'invention a pour objet un procédé de détection par désignation comportant une formation, par focalisation de flux lumineux provenant d'une scène située dans un champ de vue déterminé, d'une image et d'une tache d'une cible illuminée par laser dans ladite scène, une détection matricielle de l'image et de la tache par pixels disposés en lignes et en colonnes, une conversion photonique en charges du flux reçu par chaque pixel, et un transfert de ces charges par rangée de pixels vers un registre de sortie pour délivrer, après amplification, un signal de visualisation, le procédé étant caractérisé en ce que le transfert de ligne est réalisé en permanence vers le registre de sortie, en ce que les charges sont cumulées par colonne à une cadence compatible avec l'amplification pour former des signaux séquentiels qui composent successivement le signal de sortie, en ce qu'un repérage temporel et spatial de la tache est effectué par détection auxiliaire et par seuillage des signaux séquentiels sensiblement égaux à un niveau moyen pour détecter au moins un signal séquentiel supérieur à ce niveau moyen, et en ce qu'une écartométrie de la tache est effectuée à partir des données temporelles et spatiales dudit repérage.

L'invention a également pour objet un dispositif d'écartométrie à détecteur matriciel comportant, dans une première forme de réalisation, une matrice de pixels photosensibles de type CCD à transfert de ligne et multiplexage de charges en colonne, et un registre de sortie à décalage couplé à un amplificateur pour fournir un signal de sortie, le dispositif étant piloté par une unité de traitement.

Ce dispositif est caractérisé en ce que le séquenceur est réglé pour déclencher en permanence le transfert et le multiplexage des charges vers le registre de sortie, en ce que l'amplificateur de sortie est couplé à un comparateur à seuil qui détecte toute colonne de signal séquentiel d'intensité supérieure à une valeur seuil sensiblement égale à un niveau moyen, et en ce que, une illumination laser apparaissant à un instant donné et étant détectée par le comparateur à un instant qui suit l'instant d'apparition après une durée de temps, un capteur d'alerte laser auxiliaire déclenche une chronométrie lors de l'apparition de cette illumination laser pour déterminer cet instant d'apparition et mesurer la durée de temps le séparant de l'instant de détection du comparateur à seuil.

Dans une autre forme de réalisation, la matrice détectrice est de type à transfert de trames. Dans ce type de transfert, les charges intégrées sont simultanément et rapidement transférées (temps de transfert inférieur ou égal à la milliseconde) vers une zone mémoire adjacente. De cette façon, pratiquement aucune perte de temps n'apparaît lors de l'acquisition successive des images, c'est-à-dire entre la lecture d'une image et l'intégration de l'image suivante. L'adaptation du mode de fonctionnement en tapis roulant à ce type de détecteur permet de gagner encore plus de temps et de sensibilité.

Selon une caractéristique particulière, un filtrage centré sur au moins une raie spectrale de l'illuminateur laser utilisé, par exemple la longueur d'onde du laser Nd: YAG, soit 1, 064 $\mu$m, est réalisée lors de la focalisation du flux de scène. Cette disposition permet de diminuer le bruit spatial solaire, et donc d'augmenter l'intensité relative de la détection laser recherchée.

D'autres caractéristiques et avantages de l'invention apparaîtront à la lecture de la description qui suit en référence aux figures annexées. Outre la figure 1 illustrant l'art connu et déjà commentée, les figures annexées représentent, respectivement :

- la figure 2, un schéma général du dispositif d'écartométrie selon l'invention ;

- la figure 3, un schéma de détecteur matriciel à transfert de ligne d'une première forme de réalisation du dispositif d'écartométrie selon l'invention ;
- la figure 4, un schéma de détecteur matriciel à transfert de trame d'une deuxième forme de réalisation du dispositif d'écartométrie selon l'invention.

Dans son application principale, l'invention concerne la désignation de cible par un faisceau laser. La détection est donc effectuée au moyen d'une caméra de type CCD sensible dans un domaine spectral couvrant le visible-proche infrarouge, comportant un détecteur matriciel à circuit CCD, tel que précédemment décrit.

Une telle caméra est schématiquement illustrée en coupe sur la figure 2. Elle comporte classiquement alignés selon un axe optique X'X, un objectif 1, un diaphragme 2, un filtre spectral 3 et un détecteur matriciel ligne/colonne 4 de type CCD disposés sur l'axe optique X'X, un registre de sortie à décalage R, un étage d'amplification A, et une unité de traitement 5. L'objectif 1 permet une focalisation d'image sur le détecteur 2 disposé au foyer de l'objectif.

L'objectif d'entrée 1 et son diaphragme associé définissent un champ de vue dans lequel une scène est observée. Le flux lumineux $F_i$ provenant de la scène est projeté sur le détecteur 2 pour y former une image de scène. Le filtre permet de centrer le domaine spectral du flux $F_i$ sur celui du laser illuminateur. L'unité de traitement 5 comporte un séquenceur, par exemple un générateur d'horloges réglé sur une base de temps et couplé à un circuit de commande pour appliquer, en mode imagerie classique :

- des signaux de transfert des charges accumulées dans des puits de potentiel vers un circuit de multiplexage CCD intégré au détecteur et vers le registre de sortie ;
- des signaux d'échantillonnage appliqués au registre de sortie R pour former, après amplification, un signal de visualisation SV au standard TV désiré.

En mode de fonctionnement habituel (mode imagerie), le détecteur CCD fait l'acquisition successive d'images fixes, à la cadence réglée par l'unité de traitement. Cette acquisition se compose :

- d'une phase d'intégration dans les puits de potentiel des charges libérées proportionnellement à l'éclairement reçu ;
- d'une phase de lecture par transfert en colonne et échantillonnage de ces charges, afin de former des signaux séquentiels qui forment le signal de visualisation.

La durée de la phase d'intégration dure typiquement plusieurs millisecondes et celle de la phase de lecture, quelques dizaines de millisecondes dans les composants standards, comportant par exemple 100 X 100 pixels.

Un tel détecteur matriciel offre une bonne sensibilité de détection, en absence de signal de fond solaire. Le calcul élémentaire qui suit l'illustre parfaitement. En considérant que 4 pixels sont éclairés par la tache laser, le bruit électronique B du détecteur est sommé quadratiquement et la condition de détection du signal laser $S_l$ s'écrit, r étant le rapport signal/bruit :

$$S_l \geq r\sqrt{4B^2}$$

La valeur du signal $S_l$ s'exprime, en fonction de l'éclairement E reçu en pupille d'entrée de diamètre D, par la relation :

$$S_l = \frac{\pi}{4}D^2 t\eta\tau.E$$

t étant la durée de l'impulsion laser, $\eta$ le rendement quantique du circuit CCD, et $\tau$ le coefficient de transmission de l'objectif.

En rapprochant les deux relations précédentes, la sensibilité au niveau de la pupille optique d'entrée, définie par l'éclairement E par unité de surface, vaut 77 $nW/cm^2$, pour les valeurs de paramètre classiques suivantes : r = 7 ; B = 200 électrons ; $\eta$ = 3 % (à la longueur d'onde du laser Nd:YAG) ; $\tau$ = 0,9 ; D = 4cm.

Les difficultés d'utilisation d'une matrice de détection CCD en écartométrie viennent, comme présentées plus haut, de la contribution dominante du fond de scène dans le signal, en particulier en plein jour. Le calcul montre, en effet, que la valeur du signal de fond de scène $S_f$ peut s'exprimer en fonction de l'éclairement solaire ambiant $E_s$ par la relation :

$$S_f = \frac{\rho\eta\tau\delta p^2 T}{4N^2}E_s$$

en désignant par N le nombre d'ouverture de l'objectif, $\rho$ l'albédo de la scène, p le pas des pixels dans la matrice, $\delta$ la largeur spectral d'un filtre spectral, et T le temps d'intégration des charges.

En prenant pour valeurs T = 20 ms ; $\rho$ = 1 ; N = 2 ; p = 20 μm ; $\delta$ = 20 nm et $E_s$ = 620 W/m²/μm (plein soleil), le signal de fond solaire $S_f$ vaut 900 000 électrons.

Le bruit solaire spatial, égal à $S_f/\sqrt{12}$ , vaut alors environ 270 000 électrons et le bruit solaire photonique, égal à $\sqrt{S_f}$ ,vaut environ 950 électrons. La valeur de ces bruits est à comparer aux 200 électrons du bruit électronique du détecteur. Même en optimisant les paramètres (ouverture optique, temps d'intégration, ...) il est impossible d'obtenir un fonctionnement correct s'il est limité par le bruit spatial.

Le mode de fonctionnement en tapis roulant de l'invention permet d'éliminer le bruit spatial. Selon ce mode, le détecteur CCD est en transfert de charges permanent en colonne vers le registre de sortie : la phase d'intégration est éliminée, les signaux de transfert des charges intégrées vers le registre de sortie n'étant pas différés par l'unité de commande du séquenceur. Les charges sont alors mises en séquence à une cadence rapide, réglée par les signaux d'échantillonnage, mais encore compatible avec le fonctionnement de l'amplificateur de sortie A. Le signal de visualisation donne alors une image totalement floue, ce qui n'a aucune conséquence.

Pour mettre en oeuvre ce mode de fonctionnement, une cible illuminée dans le champ de vue est quasi-instantanément détectée par un capteur d'impulsion laser auxiliaire 6, couplé optiquement à une lentille de focalisation 7 un travers un filtre 8 centré sur la longueur d'onde du laser utilisé. Un signal de détection délivré par ce capteur est alors transmis à l'unité de traitement 5 qui déclenche une chronométrie réglée par la base de temps. Cette chronométrie est arrêtée lorsque l'unité de traitement du détecteur matriciel, sur lequel une tache laser s'est également formée, est informée de sa présence.

L'information d'arrêt de chronométrie résulte d'un seuillage des signaux séquentiels qui, cumulés à vitesse rapide, présentent, en l'absence d'impulsion laser, une intensité moyenne de même ordre de grandeur. Un dispositif de seuillage est constitué par exemple d'un comparateur couplé à un générateur de seuils, réglé sur cette intensité moyenne. Lorsque le comparateur détecte un signal séquentiel d'intensité supérieure, correspondant à la détection de la tache laser sur un pixel déterminé, le comparateur transmet un signal d'arrêt à la chronométrie.

Le mode de fonctionnement proposé dans l'invention permet donc, même en plein jour, d'utiliser la matrice de détection avec un niveau de bruit admissible pour détecter une illumination laser, en s'affranchissant du bruit spatial par seuillage, c'est-à-dire en ne tolérant que le bruit photonique du fond de scène. Le bruit photonique associé au signal moyen sur toute une colonne reste en effet d'intensité négligeable à comparer au bruit spatial, dès que le signal est conséquent ( $\sqrt{S_f}$ à comparer à $S_f/\sqrt{12}$ ), comme l'illustre l'exemple numérique présenté plus haut.

Dans ces conditions, ce mode opératoire fournit les informations relatives aux repérages temporels de la tache laser. Ces informations sont utilisées dans l'unité de traitement pour calculer une écartométrie angulaire de la cible illuminée, à partir des instants connus de traitement des charges au niveau du seuillage, préétablis par le circuit de commande, et de l'instant d'apparition de l'illumination.

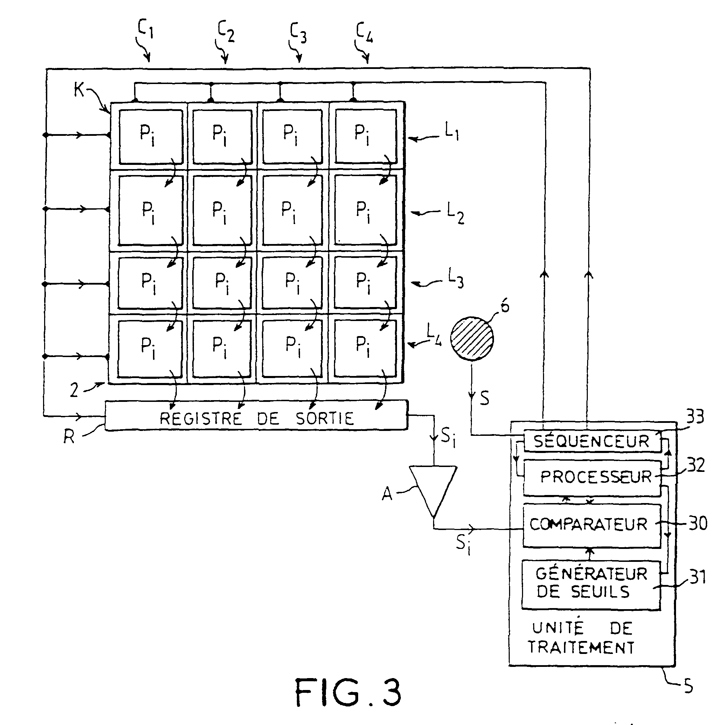

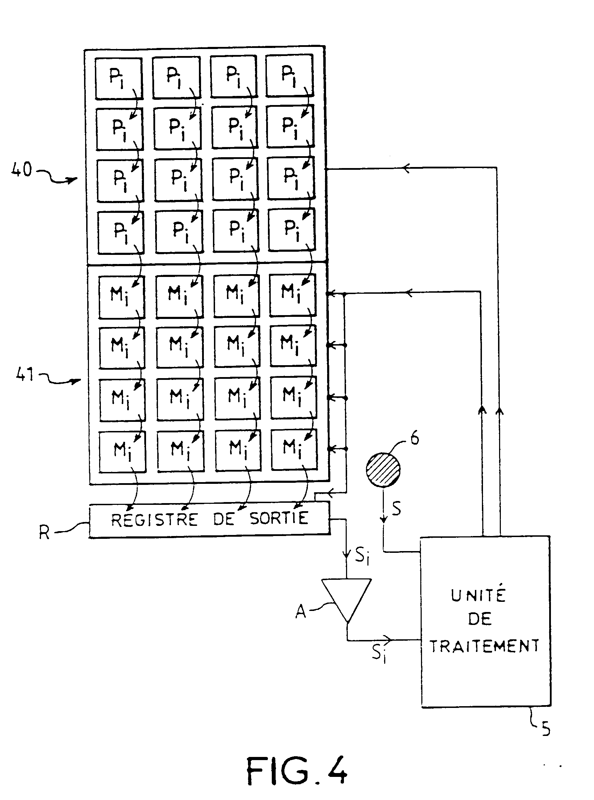

Les figures 3 et 4 qui suivent illustrent deux formes de réalisation du dispositif selon l'invention. Les éléments de ces figures qui ont été décrits en référence à la figure 2, sont désignés par les mêmes signes de référence.

Selon une première forme de réalisation, le détecteur CCD est un CCD classique dit pleine image ("full frame array" en terminologie anglosaxonne) où les pixels occupent quasiment toute la surface de la matrice. La figure 3 représente un exemple de dispositif d'écartométrie à détecteur matriciel CCD à transfert de ligne, mettant en oeuvre cette forme de réalisation.

Afin de simplifier le dessin, le détecteur matriciel 2 représenté sur la figure 3 comporte symboliquement 4X4 pixels, notés $P_i$, alors qu'en réalité les détecteurs de télévision possèdent un grand nombre de pixels, par exemple 100X100 pixels. Le registre de sortie R est connecté aux colonnes de pixels, respectivement C1 à C4, du circuit de multiplexage K du détecteur. En sortie des registres élémentaires, les signaux séquentiels $S_i$ sont amplifiés dans l'amplificateur A puis appliqués au comparateur 30 de l'unité de traitement 5. Le comparateur est couplé à un générateur de seuils 31 pour former un dispositif de seuillage. L'unité de traitement 5 comporte, outre le dispositif de seuillage, un processeur 32 et le séquenceur 33. le comparateur peut être remplacé par tout moyen connu de l'homme de l'art pour effectuer une détection de signal d'intensité supérieure. Par exemple, il est possible d'utiliser un dérivateur.

Le séquenceur intègre un circuit de commande de signaux qui est relié à tous les pixels du détecteur, à toutes les lignes L1 à L4 du circuit de multiplexage C, et au registre à décalage R, pour appliquer les signaux de transfert aux charges libérées jusqu'au comparateur dans les conditions décrites précédemment. Le transfert est dit par ligne car les charges d'une même ligne sont simultanément transférées ligne à ligne.

D'autre part, le capteur d'impulsion auxiliaire 6 est relié au séquenceur 33 afin de déclencher la chronométrie par transmission d'un signal S. Le séquenceur 33 et le comparateur 30 sont couplés au processeur 32, afin d'intégrer les données temporelles des détections d'impulsion laser, provenant des signaux délivrés par le capteur 6 et le registre de sortie du détecteur 2, et traités respectivement par le séquenceur et le comparateur. Le processeur 32 calcule l'écartométrie angulaire à partir de la détermination de l'instant d'apparition de l'illumination laser, fournie par le capteur auxiliaire, et de la position du ou des pixels illuminé(s). La détermination de cette position est effectuée à partir des données temporelles pertinentes :

- la détermination de la colonne du pixel illuminé est obtenue par la sélection du signal séquentiel d'intensité supérieure, réalisée par le comparateur; cette information est traduite au niveau du processeur par l'identification de la colonne correspondante C1, C2, C3 ou C4.
- la détermination de la ligne de ce pixel illuminé est établie à partir de la hauteur de cette ligne, cette hauteur étant calculée par le produit entre la vitesse de transfert verticale des lignes, réglée par le circuit de commande, et la chronométrie mesurant la durée séparant l'instant d'apparition de l'illumination laser signalé par le capteur auxiliaire et l'instant de sa détection en sortie du circuit CCD par le comparateur.

De plus, ce mode de lecture assure une acquisition permanente de l'image, sans la période "aveugle" due au transfert présent dans le mode imagerie, ce qui permet ainsi une probabilité de vue de l'impulsion de 100%.

Une autre forme de réalisation de l'invention met en oeuvre une matrice de détection à transfert de trame. Cette matrice utilisée en mode tapis roulant permet de diminuer davantage l'influence du fond solaire, en réduisant encore le temps d'acquisition du signal par diminution du temps de lecture.

Avec la matrice à transfert de ligne précédemment décrite, le temps d'acquisition du signal, c'est-à-dire le temps de transfert d'une ligne à travers toute la matrice, est égal à $n^2/F_{max}$, n étant le nombre de lignes dans la matrice et $F_{max}$ la fréquence de sortie du signal multiplexé. La limitation de ce temps est la cadence de sortie des informations $F_{max}$. Cependant, la cadence de transfert des lignes est sensiblement plus faible, car elle vaut $F_{max}/n$. Avec l'utilisation d'une matrice à transfert de trame en mode tapis roulant, comme décrit plus loin, cette cadence peut être augmentée jusqu'à $F_{max}$, d'où une diminution du temps d'acquisition d'un facteur n et un niveau de bruit solaire encore diminué.

Par exemple, avec des valeurs de paramètres couramment obtenues, $F_{max} = 10$ MHz, n = 100, le temps d'acquisition dans une matrice à transfert de ligne, égal à $n^2/F_{max}$, vaut 1 ms d'où un signal de fond $S_f$ de 45 000 électrons (en reprenant les valeurs numériques des autres paramètres dans l'expression de $S_f$ en fonction de l'éclairement solaire introduite plus haut). Le niveau de bruit photonique associé, égal à $\sqrt{S_f}$, est alors d'environ 210 électrons, comparable au bruit électronique. Dans le cas d'une matrice à transfert de trame, le temps d'acquisition, ramené à $n/F_{max}$, et le signal de fond solaire sont alors diminués d'un facteur 100. Le bruit photonique associé est alors très faible (de l'ordre de 20 électrons), ce qui permet d'atteindre les pleines performances de ce type de détection.

Une matrice détectrice à transfert de trame comporte, telle que schématiquement représentée sur la figure 4, une zone image 40 et une zone mémoire adjacente 41, selon une architecture classique de détecteur CCD utilisée dans les caméras de télévision.

Pour simplifier la figure, la zone image est composée de 4 X 4 pixels $P_i$, semblables aux pixels de la forme de réalisation précédente, mais disposés, cette fois-ci, de manière adjacente. La zone mémoire 41 forme un circuit de multiplexage CCD, composée de mémoires élémentaires $M_i$, réalisées en circuiterie CMOS intégrée. Comme dans l'exemple précédent, le détecteur comporte un registre de sortie R, un étage d'amplification A, et une unité de traitement 5. L'unité de traitement intègre comme précédemment un séquenceur comportant un circuit de commande de signaux.

En mode imagerie classique, l'unité de traitement règle, à travers le circuit de commande, les temps de transfert simultané des charges intégrées dans la zone image vers la zone mémoire, de transfert par colonne, et ligne à ligne, dans la zone mémoire jusqu'au registre à décalage, et la fréquence d'échantillonnage des signaux séquentiels formés par colonne pour délivrer le signal de visualisation.

Cette matrice est dite à transfert de trame car l'ensemble des charges correspondant à une trame d'image est simultanément transféré vers la zone mémoire, avec un temps de transfert relativement court, inférieur à la milliseconde. Mais, comme expliqué plus haut, le mode imagerie reste inexploitable pour la désignation laser du fait de la détection du bruit solaire spatial.

Cependant cette organisation présente l'avantage, par rapport à celle d'une matrice à transfert de ligne, de permettre la lecture d'une trame d'image dans la zone mémoire 41 pendant que l'image suivante est acquise dans la zone image 40, offrant un gain sensible en fréquence de transfert. Cette réduction de temps se traduit, lors d'une utilisation en mode tapis roulant de la matrice CCD à transfert de trame, par une réduction sensible du niveau de bruit photonique enregistré (environ 20 électrons dans l'exemple numérique) sensiblement en-dessous du niveau de bruit électronique (typiquement de 200 électrons).

L'utilisation en mode tapis roulant fait intervenir, comme précédemment :

- d'une part, dans l'unité de traitement, le comparateur couplé au générateur de seuils pour former un dispositif de seuillage et au processeur pour calculer l'écartométrie angulaire de la tache laser détectée lors d'une illumination ; et

- d'autre part, un capteur d'impulsion auxiliaire 6 relié au séquenceur afin de déclencher la chronométrie par transmission du signal S; les mêmes liaisons que précédemment sont établies entre le circuit de commande, le comparateur et le processeur, afin d'intégrer de la même façon les données temporelles des détections d'impulsion laser.

Le fonctionnement en mode tapis roulant appliqué à une matrice CCD à transfert de trame, se sépare en deux phases : une phase d'attente de détection et une phase de lecture après détection.

Dans la première phase d'attente, le signal S issu du capteur d'impulsion 6 est nul, traduisant l'absence d'impulsion laser. Pendant ce temps, le CCD est en transfert permanent à haute cadence, c'est-à-dire que la fréquence de transfert ligne atteint la fréquence maximale $F_{max}$ de sortie de la matrice. Comme il n'y a pas d'information utile dans les colonnes, les signaux sont alors "perdus" en bas des colonnes, sans être transférés vers l'étage amplificateur de sortie, puisque le registre de sortie R n'est pas capable de transférer toutes les informations en suivant leur haut débit, égal à $n.F_{max}$. Grâce à la haute cadence de transfert vertical, l'acquisition du signal de fond est réduite à un temps minimum, d'où un bruit associé minimal.

Dans la deuxième phase, lorsqu'une impulsion est détectée par le capteur annexe, le transfert des lignes à haute cadence est alors poursuivi jusqu'à amener la zone image dans la zone mémoire, c'est-à-dire pendant le temps de transfert $n/F_{max}$. Puis la zone mémoire est lue à cadence normale: fréquence de sortie dans le registre horizontal égale à $F_{max}$, et fréquence de transfert ligne de $F_{max}/n$. Le passage de la fréquence de transfert de $F_{max}$ à $F_{max}/n$ est réglé par le circuit de commande alerté par le comparateur via le processeur.

La position de la tache laser dans cette image permet alors de calculer directement l'écartométrie. Après lecture, la phase d'attente de détection reprend normalement, l'image acquise pendant la lecture de la précédente étant perdue car saturée. La présence d'une image saturée n'est pas problématique car la période des impulsions laser, de l'ordre de la dixième de seconde, est beaucoup plus longue que le temps de lecture: il n'existe pas de risques de perdre une nouvelle impulsion pendant la lecture.

L'avantage de cette solution réside dans le fait que le temps d'exposition d'un pixel est extrêmement réduit, égal à $n/F_{max}$, ce qui rend négligeable le bruit photonique du fond solaire comparé au bruit électronique, comme l'a illustré l'exemple de calcul numérique vu plus haut.

L'invention n'est pas limitée aux exemples de réalisation décrits et représentés. Par exemple, le filtrage centré sur au moins une raie spectrale de l'illuminateur laser, 1,064 µm dans le cas du laser Nd : YAG, peut être réalisé dans un système optique de focalisation du flux de scène, ou sur le détecteur matriciel. Un tel filtrage est obtenu en déposant sous vide, dans des conditions connues, un ensemble de couches minces formant un filtre interférentiel, sur un substrat, par exemple une surface dioptrique d'une lentille de focalisation ou une lame plane (en général en verre) accolée ou non au détecteur. Le filtre peut être calculé pour transmettre une ou deux raies spectrales données et absorber ou réfléchir les autres domaines spectraux.

Il est également possible d'appliquer l'invention à d'autres domaines de longueurs d'onde , par exemple dans l'ultraviolet. Il suffit d'utiliser des capteurs de sensibilité adaptée à ce domaine de longueurs d'onde.

## Revendications

1. Procédé de détection par désignation comportant une formation, par focalisation de flux lumineux ($F_i$) provenant d'une scène située dans un champ de vue déterminé, d'une image et d'une tache (T) d'une cible illuminée par laser dans ladite scène, une détection matricielle de l'image et de la tache par

pixels ($P_i$) disposés en lignes et en colonnes, une conversion photonique en charges du flux reçu par chaque pixel, et un transfert de ces charges par rangée de pixels vers un registre de sortie (R) pour délivrer, après amplification, un signal de sortie (SV), le procédé étant caractérisé en ce que le transfert de ligne est réalisé en permanence vers le registre de sortie (R), en ce que les charges sont cumulées par colonne (C1 à C4) à une cadence compatible avec l'amplification pour former des signaux séquentiels ($S_i$) qui composent successivement le signal de sortie (SV), en ce qu'un repérage temporel et spatial de la tache (T) est effectué par détection auxiliaire et par seuillage des signaux séquentiels sensiblement égaux à un niveau moyen pour détecter au moins un signal séquentiel supérieur à ce niveau moyen, et en ce qu'une écartométrie de la tache (T) est effectuée à partir des données temporelles et spatiales dudit repérage.

2. Dispositif d'écartométrie de mise en oeuvre du procédé selon la revendication 1, comportant un objectif (1) de focalisation d'une image de scène sur un détecteur matriciel (2) en ligne et en colonne intégrant un circuit de multiplexage (C) en colonne de type CCD disposé au plan de focalisation de l'objectif, un registre de sortie à décalage (R) qui échantillonne des signaux séquentiels formés par colonne, un étage d'amplification (A), et une unité de traitement (5) qui comprend un séquenceur (33) pour appliquer des signaux de transfert des charges accumulées dans des puits de potentiel vers le circuit de multiplexage CCD (C) et vers le registre de sortie (R), et des signaux d'échantillonnage au registre de sortie (R) pour former, après amplification, un signal de sortie (SV), caractérisé en ce que les signaux de transfert des charges intégrées vers le registre de sortie (R) ne sont pas différés par l'unité de traitement (5), en ce qu'un capteur d'impulsion laser auxiliaire (6) est relié à l'unité de traitement (5) pour déclencher une chronométrie lorsqu'il reçoit une illumination laser, en ce qu'un dispositif de seuillage (30, 31) des signaux séquentiels transmet un signal d'arrêt de chronométrie lorsqu'il détecte un signal séquentiel correspondant à un pixel illuminé d'intensité supérieure aux autres, et en ce que l'unité de traitement (5) comporte un processeur (32) pour calculer une écartométrie de cible à partir des données temporelles de la chronométrie, de l'apparition de l'illumination laser, et de la détermination de la position du pixel illuminé.

3. Dispositif d'écartométrie de mise en oeuvre du procédé selon la revendication 2, caractérisé en ce que, la matrice de détection étant à transfert de ligne, le registre de sortie (R) étant connecté à une colonne (C1 à C4) du circuit de multiplexage (C) du détecteur, en ce qu'en sortie du registre de sortie (R), les signaux séquentiels (S1 à S4) sont amplifiés dans un amplificateur (A) de l'étage d'amplification (A) puis appliqués au dispositif de seuillage (30, 31) de l'unité de traitement (5), en ce que le séquenceur (33) est relié à tous les pixels ($P_i$) du détecteur, à toutes les lignes (L1 à L4) du circuit de multiplexage (C) et au registre à décalage (R), en ce que le capteur d'impulsion auxiliaire (6) est relié au séquenceur (33) pour transmettre un signal (S) de déclenchement de chronométrie, en ce que le séquenceur (33) et le dispositif de seuillage (30) sont couplés au processeur (32) afin d'intégrer les données temporelles des détections d'impulsion laser provenant des signaux délivrés par le capteur (6) et le registre de sortie (R), et en ce que la détermination de la position des pixels illuminés est effectuée par le dispositif de seuillage par identification de la colonne (C1, C2, C3 ou C4) qui a délivré le signal séquentiel d'intensité supérieure, et par identification de la ligne de ce pixel illuminé à partir des données fournies par le séquenceur et par la chronométrie.

4. Dispositif d'écartométrie de mise en oeuvre du procédé selon la revendication 2, caractérisé en ce que, la matrice de détection étant à transfert de trames comportant une zone image (40) de pixels ($P_i$) organisés en matrice et une zone mémoire (41) de mémoires ($M_i$) de type circuit de multiplexage CCD, adjacente à la zone image et dans laquelle les charges libérées sont simultanément transférées, en ce que les signaux d'échantillonnage sont réglés en fréquence pour que les charges soient mises en séquence à une cadence limitée par l'étage amplificateur de sortie (A).

5. Dispositif d'écartométrie de mise en oeuvre du procédé selon l'une des revendications 3 ou 4, caractérisé en ce qu'un filtrage centré sur au moins une raie spectrale de l'illuminateur laser utilisé est réalisée lors de la focalisation du flux ($F_i$) de scène.

6. Dispositif selon la revendication 5, caractérisé en ce que le filtrage est obtenu en déposant un ensemble de couches minces formant un filtre interférentiel sur un substrat.

FIG.1

FIG.2

FIG.3

FIG.4

# EP 0 770 884 A1

Office européen
des brevets

**RAPPORT DE RECHERCHE EUROPEENNE**

Numero de la demande
EP 96 40 2195

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 5 280 167 A (JACQUES DUBOIS)<br>* abrégé *<br>* colonne 2, ligne 26 - colonne 4, ligne 41; figure * | 1 | G01S3/784<br>F41G7/22 |
| A | DE 38 15 373 A (PRECITRONIC GESELLSCHAFT FÜR FEINMECHANIK UND ELECTRONIC MBH)<br>* abrégé *<br>* colonne 2, ligne 42 - colonne 3, ligne 38; figures 1,2 * | 1 | |
| A | US 5 343 287 A (WILKINS)<br>* abrégé *<br>* colonne 4, ligne 64 - colonne 8, ligne 55; figures 1-8 * | 1 | |
| A | DE 33 38 191 A (MESSERSCHMITT BÖLKOW BLOHM GMBH)<br>* abrégé *<br>* colonne 2, ligne 20 - colonne 3, ligne 48; figures 1-4 * | 1 | |
| | | | **DOMAINES TECHNIQUES RECHERCHES (Int.Cl.6)** |
| A | US 4 143 835 A (JENNINGS JR. ET AL.)<br>* abrégé *<br>* colonne 1, ligne 58 - colonne 2, ligne 35; figure * | 1 | G01S<br>F41G |

Le présent rapport a été établi pour toutes les revendications

| Lieu de la recherche | Date d'achèvement de la recherche | Examinateur |
|---|---|---|
| LA HAYE | 6 Février 1997 | Blondel, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)